# EUROPEAN PATENT APPLICATION

(11) **EP 2 351 781 A1**
(43) Date of publication of application: **03.08.2011**
(21) Application number: 10151973.4
(22) Date of filing: 28.01.2010
(51) Int. Cl.: C08F 10/02, C08F 2/34

(54) **Injection stretch blow moulding containers prepared with polyethylene**

(71) Applicant: Total Petrochemicals Research Feluy, 7181 Seneffe (Feluy) (BE)
(72) Inventor: Boissière, Jean-Marie, 1060, Bruxelles (BE); Vantomme, Aurélien, 5170 Bois-de-Villers (BE); Belloir, Pierre, 1420 Braine-L'alleud (BE); Van Sinoy, Alain, 1450 Chastre (BE)
(74) Representative: Jantschy, Jasmin

(57) **Abstract**

An injection stretch blow moulded container prepared essentially from polyethylene prepared in the presence of a chromium-based catalyst system, the polyethylene having a density of from 0.950 to 0.965 g/cm³, measured following the method of standard test ASTM 1505 at a temperature of 23 °C, a melt index MI₂ of from 0.5 to 5 g/10min, measured following the method of standard test ASTM D 1238 at a temperature of 190 °C and under a load of 2.16 kg, and a high load melt index HLMI of from 40 to 150 g/10min, measured following the method of standard test ASTM D 1238 at a temperature of 190 °C and under a load of 21.6 kg,
- the container weighing from 10 to 150g per dm³ of volume, when the container has a volume of less than 300 cm³,
- the container weighing from 10 to 80g per dm³ of volume, when the container has a volume of at least 300 cm³.

## Description

### FIELD OF THE INVENTION

The present invention relates to one- or two-stage injection-stretch-blow-moulded (ISBM) containers prepared with a polyethylene resin, as well as an injection-stretch-blow-moulding process.

### BACKGROUND OF THE INVENTION

Injection-stretch blow molding (ISBM) is a process widely used for the production of containers, such as bottles, using thermoplastic polymers. The process includes the steps of preparing a pre-form by injection molding and then expanding the pre-form to the desired final shape. In general, one distinguishes one-stage and two-stage processes. In the one-stage process the steps of producing the pre-form and expanding the pre-form to the desired final shape are performed in the same machine. In the two-stage process these two steps are performed in different machines, in some cases even in different geographical locations; the pre-form is allowed to cool to ambient temperature and is then transported to a second machine where it is reheated and expanded to the desired final shape. Due to reasons of production speed and flexibility the two-stage process is preferred for larger production volumes.

The polypropylenes presently used in injection-stretch blow molding applications allow for the production of containers with good optical properties at industrially viable production rates. However, as compared to other polymers used in injection-stretch blow molding polypropylene suffers from a lack of the combination of high rigidity and high impact strength, particularly at lower temperatures. Thus, there is an interest for improving the impact performance and rigidity of injection-stretch blow molded containers having reduced weight.

Besides polypropylene, it is also possible to use polyethylene for making injection-stretch-blow-moulded articles.

A number of different catalyst systems have been disclosed for the manufacture of polyethylene, in particular high density polyethylene (HDPE). It is known in the art that the physical properties, in particular the mechanical properties, of a polyethylene product vary depending on what catalytic system was employed to make the polyethylene. This is because different catalyst systems tend to yield different molecular weight distributions in the polyethylene produced. For injection stretch blow moulding, a balance has to be found between the high fluidity required for the first step to form the preform and the lower fluidity required for the second step when blowing the preform.

JP2000086722 discloses injection stretch blow molding bottles prepared with a high-density polyethylene having a density of 0.961 to 0.973g/cm³, a melt flow index of 1 to 15g/10min, and a flow ratio of 10 to 14.5 (ratio of melt flow under a load of 11204g to the melt flow under a load of 1120g at 190°C), prepared with a chromium, Ziegler-Natta or metallocene catalyst, preferably with a metallocene catalyst. The disclosure alleges these bottles have high rigidity and ESCR and thus a reduced weight. However, according to the examples, the bottles produced according to this method are still unacceptably heavy, requiring 100g of material for an 800ml bottle, i.e. 125 g per dm³ of volume of the bottle. A bottle of such size having reduced weight to volume ratio, but still maintaining uniform thickness, good surface aspects and finishing, high top load and high impact resistance is still needed, particularly bottles required for packaging consumer products e.g. dairy products, such as milk.

JP9194534 discloses the injection stretch blow molding bottles prepared with a high-density polyethylene having a density of 0.940 to 0.968 g/cm³ and a melt flow index of 0.3 to 10 g/10min (ASTM D1238 at 190°C and 2.16kg) and a flow ratio of 15 to 30 (ratio of melt flow under a load of 11204g to the melt flow under a load of 1120g at 190°C). Preferably the resin further comprises another ethylene polymer of the same density and/or a high pressure polyethylene having a density lower than 0.925g/cm³. A Philipp's catalyst can be used to prepare the polyethylene. The examples disclose bottles having good surface smoothness and gloss, but a weight of 43g for a volume of 500ml, i.e. 86 g per dm³ of volume. This is unacceptably heavy. A bottle of such size having a reduced weight to volume ratio, but still maintaining uniform thickness, good surface aspects and finishing, high top load and high impact resistance is still needed, particularly bottles required for packaging consumer products e.g. dairy products, such as milk.

JP2000086833 discloses injection stretch blow molding compositions comprising (A) a polyethylene having a melt flow index of 2 to 20g/10min and a density of not less than 0.950g/cm³ prepared with a metallocene catalyst at 100 parts per weight and (B) a polyethylene having a melt flow index of 0.05 to 2g/10min and a density of not less than 0.950g/cm³ prepared with a chromium catalyst at 5 to 40 parts per weight. Thus, a mixture of two different polyethylenes is always required in order to arrive at the alleged properties of high stretch ratios, high rigidity and excellent ESCR. However, the weight of the bottles still leaves room for improvement. The examples disclose bottles weighing 80g for a volume of 800ml, i.e. 100g per dm³ of volume of the bottle. A bottle of such size having a much reduced weight to volume ratio, but still maintaining uniform thickness, good surface aspects and finishing, high top load and high impact resistance prepared with preferably just one single polyethylene resin is still needed, particularly bottles required for packaging consumer products e.g. dairy products, such as milk.

It is thus an aim of the invention to provide a polyethylene resin for injection stretch blow moulding with a broad processing window.

It is also an aim of the invention to provide a polyethylene resin for injection stretch blow moulding with good process stability.

In addition is an aim of the invention to provide injection stretch blow moulded containers prepared with polyethylene with a high impact resistance.

Furthermore, it is an aim of the invention to provide injection stretch blow moulded containers prepared with polyethylene with high rigidity.

In addition, it is also an aim of the invention to provide injection stretch blow moulded containers prepared with polyethylene with a high top load. The top load is the ability of a standing bottle to withstand the weight of other bottles on pallets.

It is further an aim of the invention to provide injection stretch blow moulded containers prepared with polyethylene good thickness repartition i.e. uniform thickness.

It is additionally an aim of the invention to provide injection stretch blow moulded containers prepared with polyethylene with good surface aspects.

It is furthermore an aim of the invention to provide injection stretch blow moulded containers prepared with polyethylene with good finishing i.e. obtain accurately moulded imprints on the containers.

It is also an aim of the invention to provide an injection stretch blow moulded containers prepared with polyethylene having a reduced weight to volume ratio.

It is also an aim of the invention to provide an injection stretch blow moulded containers prepared essentially with a single polyethylene.

Finally, it is also an aim of the invention to provide injection stretch blow moulded containers prepared with polyethylene suitable for consumer packagaging, in particular food products e.g. dairy products, such as milk.

At least one of these aims is fulfilled by the resin of the present invention.

### SUMMARY OF THE INVENTION

The invention is an injection stretch blow moulded container prepared essentially from polyethylene prepared in the presence of a chromium-based catalyst system, the polyethylene having a density of from 0.950 to 0.965 g/cm³, measured following the method of standard test ASTM 1505 at a temperature of 23°C, a melt index MI₂ of from 0.5 to 5 g/10min, measured following the method of standard test ASTM D 1238 at a temperature of 190°C and under a load of 2.16 kg, a high load melt index HLMI of from 40 to 150 g/10min, measured following the method of standard test ASTM D 1238 at a temperature of 190°C and under a load of 21.6 kg,
- the container weighing from 10 to 150g per dm³ of volume, when the container has a volume of less than 300 cm³,
- the container weighing from 10 to 80g per dm³ of volume, when the container has a volume of at least 300 cm³.

Thus the container is made from essentially one polyethylene resin. The invention allows the preparation of injection stretch blow moulded containers which have a reduced weight to volume ratio for containers of at least or larger than 300 cm³. These containers according to the invention still at least maintain uniform thickness, good surface aspects and finishing (i.e. accurately moulded imprints), high top load and high impact resistance in comparison with injection stretch blow moulded polyethylene-comprising containers of the prior art.

In particular, the containers according to the invention are suitable for consumer packaging, in particular for packaging food, e.g. dairy products, such as milk. Thus use of the containers as milk bottles is also claimed.

The injection stretch blow moulding process using essentially one chromium-catalysed polyethylene is also covered by the invention. The process enjoys a broad processing window and good process stability when using this resin.

### BRIEF DESCRIPTION OF THE FIGURES

Fig. 1 depicts a schematic drawing of an injection moulded preform obtained from the first stage of the injection stretch blow moulding process.
Fig. 2 depicts a schematic drawing of an injection stretch blow moulded bottle obtained by blowing an injection moulded preform during the second stage of the injection stretch blow moulding process
Fig. 3 depicts the side view of an attempted bottle prepared with a Ziegler-natta polyethylene resin.
Fig. 4 depicts the side view of a bottle prepared according to the invention.
Fig. 5 depicts the top view of a bottle prepared according to the invention.
Fig. 6 depicts the side view of an attempted bottle prepared with a metallocene polyethylene resin.

### DETAILED DESCRIPTION OF THE INVENTION

### THE CATALYST SYSTEM

Chromium-based catalyst systems (also known in the art as a "Phillips-type catalyst systems") have been known since the 1950's. Any chromium-based catalyst system known in the art can be used to obtain the polyethylene resin according to the invention.

Usually the chromium-based catalyst is present on a support such as a silica-based support. Silica-based supports comprise at least 50% by weight of amorphous silica. Preferably the support is a silica support or a silica alumina support. In the case of silica alumina supports, the support comprises at most 15% by weight of alumina.

In one embodiment, in order to improve either the mechanical properties or the melt index of the polyethylene products, titanium is added as a promoter. The chromium-based catalyst preferably comprises a supported chromium oxide catalyst having a titania-containing support, for example a composite silica and titania support. A particularly preferred chromium-based catalyst may comprise from 0.2 to 5 wt% chromium. For slurry polymerizations, the catalyst preferably comprises from 0.8 to 1.5 wt% chromium, more preferably up to 1 wt% chromium e.g. 0.9 wt% chromium based on the weight of the chromium-based catalyst. For gas phase polymerizations, the catalyst preferably comprises around 0.2 to 0.8 wt% chromium, more preferably 0.4 to 0.5 wt% chromium. Optionally, the support comprises preferably from 2 to 5 wt% titanium, more preferably around 2 to 3 wt% titanium, yet more preferably around 2.3 wt% titanium based on the weight of the chromium-based catalyst. The chromium-based catalyst may have a specific surface area of from 100, 150 or 200 up to 700 m²/g, preferably from 400 to 550 m²/g. For gas phase polymerizations, the specific surface area is preferably from 200 to 300 m²/g and for slurry polymerizations from 250 to 400 m²/g. Furthermore the catalyst may have a volume porosity of greater than 2 cm³/g, preferably from 2 to 3cm³/g.

An example of a particularly preferred chromium-based catalyst for slurry polymerizations ("catalyst 1 ") has an average pore radius of 190A, a pore volume of around 2.1 cm³/g, a specific surface area of around 510 m²/g and a chromium content of around 0.9 wt% based on the weight of the chromium-containing catalyst. The support comprises a composite silica and titania support. The amount of titania in the support provides that the catalyst as a whole comprises around 2.3 wt% titanium.

The catalyst may be subjected to an initial activation step in air at an elevated activation temperature. The activation temperature preferably ranges from 500 to 850°C.

The chromium-based catalyst is preferably subjected to a chemical reduction process in which at least a portion of the chromium is reduced to a low valence state. The chromium-based catalyst has preferably been chemically reduced, for example by carbon monoxide. More preferably, the chromium-based catalyst is reduced in an atmosphere of dry carbon monoxide in nitrogen gas, typically 8% CO in N₂ at a temperature of from 250 to 500°C, more preferably around 340°C, for a period typically around 30 minutes.
Optionally, the catalyst has been fluorinated, for example using NH₄BF₄ as a fluorine source, so as to provide a fluorine content of around 1 wt% in the catalyst, based on the weight of the catalyst.

Optionally, the chromium-based catalyst system may further comprise any co-catalyst known in the art. Co-catalysts include metal alkyls and alkyl metal oxanes or mixtures thereof.
Examples of metal alkyls are one or more of triethyl boron, triethyl aluminium, dibutyl magnesium, diethyl zinc and butyl lithium.
Examples of alkyl metal oxane are one or more of diethylene aluminium ethoxy and methyl aluminium oxane.
The co-catalyst can be injected together with the chromium-based catalyst or separately into the polymerization reactor when polymerising the ethylene.

An example of a particularly preferred chromium-based catalyst for gas phase polymerizations is the chromium-based catalyst prepared according to EP 2 004 704, which is entirely incorporated herein by reference. The chromium-based catalyst according to this particularly preferred embodiment is prepared by
a) providing a silica-based support having a specific surface area of at least 250 m²/g, preferably at least 280 m²/g, and of less than 400 m²/g, preferably less than 380 m²/g, more preferably less than 350 m²/g, and comprising a chromium compound deposited thereon, the ratio of the specific surface area of the support to chromium content being at least 50000 m²/g Cr, preferably ranging from 50000 to 200000 m²/g Cr;
b) dehydrating the product of step a), preferably at a temperature of at least 220°C in an atmosphere of dry and inert gas;
c) titanating the product of step b) in an atmosphere of dry and inert gas containing at least one vaporised titanium compound of the general formula selected from RₙTi(OR')ₘ and (RO)ₙTi(OR')ₘ, wherein R and R' are the same or different hydrocarbyl groups containing from 1 to 12 carbon atoms, and wherein n is 0 to 3, m is 1 to 4 and m+n equals 4, preferably at a temperature of at least 220°C, more preferably at least 250°C, most preferably at least 270°C, to form a titanated chromium-based catalyst having a ratio of specific surface area of the support to titanium content of the titanated catalyst ranging from 5000 to 20000 m²/g Ti, preferably 6500 to 15000 m²/g Ti.

In this case, preferably, if the support has a specific surface area of from at least 250 m²/g and of less than 380 m²/g, the ratio of specific surface area of the support to titanium content of the titanated catalyst ranges from 5000 to 20000 m²/g Ti, and if the support has specific surface area of from at least 380 m²/g and of less than 400 m²/g, the ratio of specific surface area of the support to titanium content of the titanated catalyst ranges from 5000 to 8000 m²/g Ti.

The at least one titanium compound in step c) is preferably selected from the group consisting of tetraalkoxides of titanium having the general formula Ti(OR')₄ wherein each R' is the same or different and can be an alkyl or cycloalkyl group each having from 3 to 5 carbon atoms, and mixtures thereof.

Finally, the titanated chromium-based catalyst system of step c) is activated at a temperature of from 500 to 850°C, preferably of from 500 to 700°C, prior to being used in the polymerisation of ethylene to obtain the polyethylene resin according to the invention.

### THE POLYMERISATION PROCESS

The high density polyethylene resin according to the invention is then prepared by polymerising ethylene in the presence of a chromium-based catalyst system and optionally an alpha-olefin comonomer, either in a gas-phase process or in a liquid slurry phase process. As referred to herein "polymerisation", "polymerising" etc. include both homo- and copolymerisation processes.

In a liquid slurry phase process, the liquid comprises ethylene, and where required one or more alpha-olefinic comonomers comprising from 3 to 10 carbon atoms, in an inert diluent. The comonomer may be selected from 1-butene, 1-hexene, 4-methyl 1-pentene, 1-heptene and 1-octene. The inert diluent is preferably isobutane. The polymerisation process is typically carried out at a polymerisation temperature of from 85 to 110°C and at a pressure of at least 20 bars. Preferably, the temperature ranges from 95 to 110°C and the pressure is at least 40 bars, more preferably from 40 to 42 bars. Other compounds such as a co-catalyst, e.g. metal alkyl, or hydrogen may be introduced into the polymerisation reaction to regulate activity and polymer properties such as melt flow index. In one preferred process of the present invention, the polymerisation process is carried out in one or more liquid-full loop reactors.

Preferably, the polyethylene resin according to the invention is prepared in a gas phase polymerisation process. Gas phase polymerisations can be performed in one or more fluidised bed or agitated bed reactors. The gas phase comprises ethylene, if required an alpha-olefinic comonomer comprising 3 to 10 carbon atoms, such as 1-butene, 1-hexene, 4-methyl-1-pentene, 1-octene or mixtures thereof and an inert gas such as nitrogen. Optionally a co-catalyst, e.g. metal alkyl, can also be injected in the polymerisation medium as well as one or more other reaction-controlling agents, for example, hydrogen. For high density polyethylenes, the higher the temperature and the higher the ratio of the specific surface area to chromium content of the catalyst i.e. the lower the chromium content, the better the mechanical properties of the resin will be. Reactor temperature can be adjusted to a temperature of from 80, 85, 90 or 95°C up to 100, 110, 112 or 115°C (Report 1: Technology and Economic Evaluation, Chem Systems, January 1998). Optionally a hydrocarbon diluent such as pentane, isopentane, hexane, isohexane, cyclohexane or mixtures thereof can be used if the gas phase unit is run in the so-called condensing or super-condensing mode.

### THE POLYETHYLENE RESIN

The high density polyethylene resin used according to the invention has a density of from 0.950 to 0.965 g/cm³, preferably 0.952 to 0.965 g/cm³, more preferably 0.954 to 0.965 g/cm³ and most preferably 0.957 to 0.965 g/cm³. The polyethylene resin has a melt index MI2 of from 0.5 to 5 g/10min, preferably 0.7 to 3 g/10min. Furthermore, the polyethylene resin has an HLMI of from 40 to 150 g/10min, preferably of from 45 to 140 g/10min, more preferably of from 50 to 130 g/10min. Furthermore, the resin according to the invention preferably has a shear response SR₂ i.e. the ratio of HLMI to MI₂ (=HLMI/MI₂) of less than 80, preferably less than 75, more preferably of from 8 to 70. The shear response is representative of the processability of the resin.

The density is measured according to the method of standard test ASTM 1505 at a temperature of 23°C. The melt index MI2 and high load melt index HLMI are measured by the method of standard test ASTM D 1238 respectively under a load of 2.16 kg and 21.6 kg and at a temperature of 190°C.

The polyethylene resin may contain additives such as, by way of example, antioxidants, light stabilizers, acid scavengers, lubricants, antistatic additives, nucleating/clarifying agents, and colorants. An overview of such additives may be found in Plastics Additives Handbook, ed. H. Zweifel, 5th edition, 2001, Hanser Publishers.

### INJECTION-STRETCH BLOW MOLDING

The polyethylene resin is particularly suitable for injection stretch blow molding applications. In particular, it provides a broad processing window, good process stability to prepare containers with good thickness repartition, good surface aspects, good finishing, and a high top load. The process according to the invention allows obtaining bottles with a reduced weight.

The injection-stretch blow molding process of the present invention can either be a one-stage or a two-stage process. In a one-stage process injection molding of the preform and blowing of the preform to the final desired shape are performed on the same machine, whereas in a two-stage process injection-molding of the preform and blowing of the preform are conducted in different machines, which can be separated by a long distance. Thus, the two-stage process additionally requires the cooling of the preform to ambient temperature and a subsequent reheating before the blowing step.

It has now been surprisingly found that under stretching and blowing conditions similar to those used for polyethylene terephthalate, containers with high rigidity, high impact resistance and low weight can be obtained.

The polyethylene resins used according to the invention, having such a specific composition, molecular weight and density, can lead to a marked improvement of the processing properties when the resin is used in injection-stretched-blow-moulding, while conserving or improving mechanical behaviour as compared to the same articles prepared with other resins. Furthermore, the containers can have a thinner wall thickness, thus reducing the weight of each individual container. This is particularly useful when transporting the containers. The containers are made with essentially one polyethylene resin according to the invention.

The present invention also comprises the method for preparing preforms, the preforms so obtained, the use of said preforms for preparing containers, and the containers prepared from said preforms.

Polyethylene resin is generally not used in injection-stretch-blow-moulding applications and the injection-stretch-blow-moulding conditions are thus adapted accordingly.

The preform, which has an open and a closed end, is prepared by injection molding. For the present invention the polyethylene resin according to the invention is fed to an extruder, plasticized and injected under pressure into an injection mold through an opening, generally referred to as "gate". The polyethylene resin is injected into the injection mold at an injection temperature of at least 220°C, preferably of at least 230°C. The injection temperature is at most 300°C, preferably at most 290°C and most preferably at most 280°C. The choice of injection temperature depends upon the melt flow index of the polyethylene resin. It is clear to the skilled person that a lower melt flow index requires a higher injection temperature and vice versa. The injection mold is filled at such a rate as to give a ratio of mold filing rate (in cm³/s) over gate size (in mm) of 15 or less, preferably of 10 or less. The preform is cooled inside the injection mold and removed from it. The ratio of mold filling rate over gate size varies depending upon the viscosity of the molten polyethylene resin, i.e. a more viscous molten polyethylene resin requires a lower value for the ratio than a more fluid molten polyethylene resin, so that a preform with good processing properties in the subsequent stretch-blowing steps will be obtained.

The two-step process comprises the steps of:
- providing a preform by injection moulding on a mould, preferably on a multi-cavity mould;
- cooling the preform to room temperature;
- transporting the preform to the blow moulding machine;
- reheating the preform in the blow moulding machine in a reflective radiant heat oven
- optionally passing the heated preform through an equilibration zone to allow the heat to disperse evenly through the preform wall;
- optionally, submitting the preform to a pre-blow step;
- stretching the preform axially by a centre rod;
- orienting the stretched preform radially by high pressure air.

The one-step process comprises the steps of:
- providing a pre-form by injection moulding on a mould, preferably on a multi-cavity mould;
- optionally slightly re-heating the pre-form;
- optionally, passing the heated pre-form through an equilibration zone to allow the heat to disperse evenly through the pre-form wall;
- optionally, submitting the preform to a pre-blow step;
- stretching the pre-form axially by a centre rod;
- orienting the stretched pre-form radially by high pressure air.

In a two-stage process the preform is allowed to cool to ambient temperature and transported to a different machine. The preforms are uniformly reheated to a temperature below the polyethylene's melting point. The reheating can be followed by an equilibration step. Subsequently, the preform is transferred to the stretch-blowing zone and secured within the blowing mold, which has the same shape as the final container, in such a way that the closed end of the preform points to the inside of the blowing mold. The preform is stretched axially with a center rod, generally referred to as "stretch rod" to bring the wall of the perform against the inside wall of the blowing mold. The stretch rod speed can go up to 2000 mm/s. Preferably it is in the range from 100 mm/s to 2000 mm/s, and more preferably in the range from 500 mm/s to 1500 mm/s. Pressurized gas is used to radially blow the preform into the blowing mold shape. The blowing is done using gas with a pressure in the range from 5 bars to 40 bars, and preferably from 10 bars to 30 bars.

The blowing of the preform can also be performed in two steps, by first pre-blowing the preform with a lower gas pressure, and then blowing the preform to its final shape with a higher gas pressure. The gas pressure in the pre-blowing step is in the range from 2 bars to 10 bars, preferably in the range from 4 bars to 6 bars. The preform is blown into its final shape using gas with a pressure in the range from 5 bars to 40 bars, more preferably from 10 bars to 30 bars, and most preferably from 15 bars to 25 bars.

Following the stretching and blowing, the container is rapidly cooled and removed from the blowing mold.

By using the polyethylene obtained using a chromium-based catalyst system, both the preform production and blowing stages are rendered more stable. The containers lack any spots and marks and are uniform in thickness.

The containers obtained by the injection-stretch blow molding process of the present invention are characterized by good impact properties in combination with high rigidity.

Furthermore, according to the invention the containers have a reduced weight, which is advantageous for packaging and transporting consumer goods.

The container according to the invention weighs from 10 to 150g per dm³ of volume, preferably of from 10 to 120g per dm³ of volume, more preferably of from 10 to 100g per dm³ of volume, when the container has a volume of less than 300 cm³.
The container according to the invention weighs from 10 to 80g per dm³ of volume, preferably of from 10 to 70g per dm³ of volume, more preferably of from 10 to 50g per dm³, when the container has a volume of at least 300 cm³. Preferably, when the container has a volume of from 500 cm³ to 2 dm³, the weight to volume ratio is from 15 to 40g per dm³.
Thus the containers made from essentially one polyethylene resin have a reduced weight to volume ratio than resins of the prior art, whilst maintaining all other desirable properties.
The articles prepared according to the present invention are hollow containers, in particular bottles, that can be used for consumer packaging, particularly in various food applications. The food applications comprise in particular the packaging of juices, water, dry products and dairy products, e.g. for packaging milk. Thus preferably the containers according to the invention are milk bottles.

### EXAMPLES

### 1. Resin properties

The resin properties of polyethylene resins Example 1 and Comparative Examples 1 and 2 are given in Table 1 below.

Example 1 is a polyethylene resin according to the invention prepared with a chromium-based catalyst having a Ti content of 4 %wt, a Cr content of 0.6 %wt, a specific surface area of 285 m²/g and a pore volume of 1.3 cm³/g, the polyethylene being prepared in a gas phase process having a hexene-ethylene gas flow of 0.045% at a temperature of 112°C. Comparative examples 1 and 2 are polyethylene resins prepared with a Ziegler-Natta catalyst and a metallocene catalyst respectively.

**Table 1**

| **Grade** | | **Ex 1** | **Comp Ex 1** | **Comp Ex 2** |
|---|---|---|---|---|
| **DENSITY** | (kg/m³) | 962 | 959 | 958 |
| **MI-2** | (g/10 min) | 0.8 | 0.3 | 7.8 |
| **HLMI** | (g/10 min) | 51.9 | 20.8 | 173.5 |
| **GPC** | Mn (g/mol) | 14357 | 14030 | 19363 |
| | Mw (g/mol) | 111628 | 179985 | 54548 |
| | Mz (g/mol) | 978338 | 1290753 | 101876 |
| | d (Mw/Mn) | 7.8 | 12.8 | 2.8 |
| | d' (Mz/Mw) | 8.8 | 7.2 | 1.9 |

| **Swell (%)** | Log shear rate | | | |
|---|---|---|---|---|
| | 7.07 | 65 | 33.5 | N/A |
| | 14.48 | 70.75 | 37.5 | N/A |
| | 28.8 | 76.75 | 41 | N/A |
| | 71.5 | 87.25 | 51.25 | N/A |
| | 142.5 | 98.25 | 60.5 | N/A |
| | 272.1 | 112.5 | 71.25 | N/A |
| | 715.6 | 130.25 | 86.25 | N/A |

The density is measured according to the method of standard test ASTM 1505 at a temperature of 23 °C. The melt index MI2 and high load melt index HLMI are measured by the method of standard test ASTM D 1238 respectively under a load of 2.16 kg and 21.6 kg and at a temperature of 190 °C.

The molecular weight distributions d and d' are defined by the ratio Mw/Mn and Mz/Mw respectively where Mn (number average molecular weight), Mw (weight average molecular weight) and Mz (z-average molecular weight) are determined by gel permeation chromatography (GPC).

Swell was measured at 210°C (die: length: 10 mm, diameter: 2 mm).

### 2. Injection process

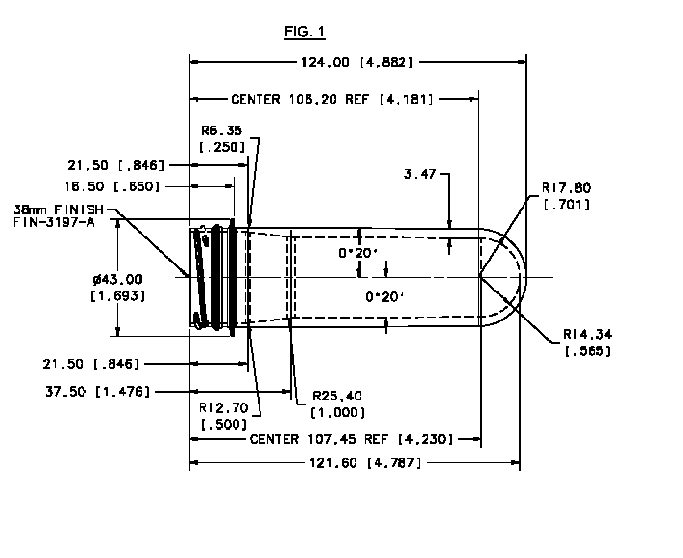

The preforms (36 g each) (see Fig. 1 for the "preform design") were prepared by injecting the polyethylene resins in a Arburg 370 C mono-cavity press.

The conditions used for injection are given in the table 2.

**Table 2**

| | **Ex 1** | **Comp Ex 1** | **Comp Ex 2** |
|---|---|---|---|
| **Temperature (°C)** | 230 | 230 | 245 |
| **Flow rate (cm³/s)** | 7 | 5 | 12.5 |
| **Peak Pressure (bar)** | 660 | 753 | 484 |

Table 3 provides the aspect and appearance of the obtained performs.

**Table 3**

| | **Ex 1** | **Comp Ex 1** | **Comp Ex 2** |
|---|---|---|---|
| **Preforms** | No significant marks | Random flow lines | No marks |

After this, these performs were then transformed into bottles.

### 3. Bottles obtained

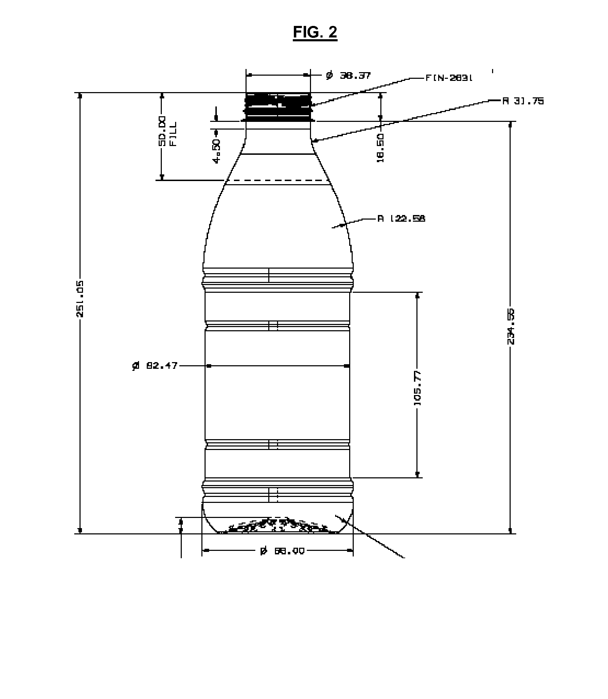

The bottles (1 litre each) (see Fig. 2) have been blown on a SIDEL SBO-1 using the following conditions:
- A flat oven temperature profile
- A high amount of ventilation (80% to 100%)
- A smooth pre-blowing at around 5 bar
- A low setup for the high blow pressure between 10 and 13 bar.

All 3 variables have been processed the same way with the same range of temperatures of 123-124°C.

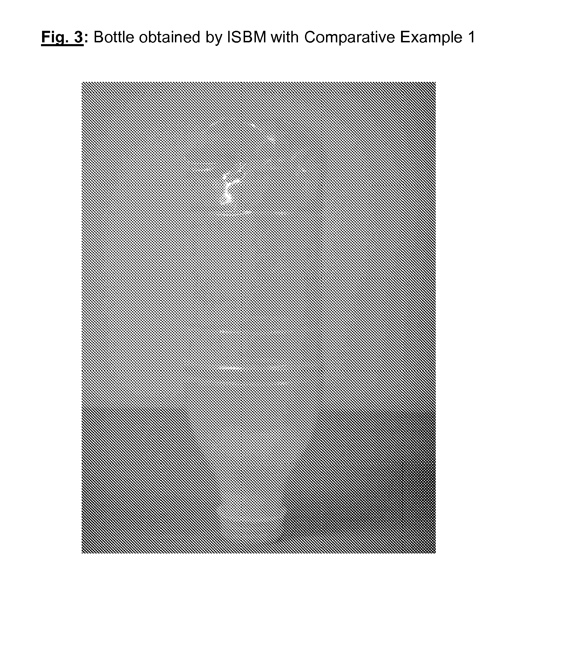

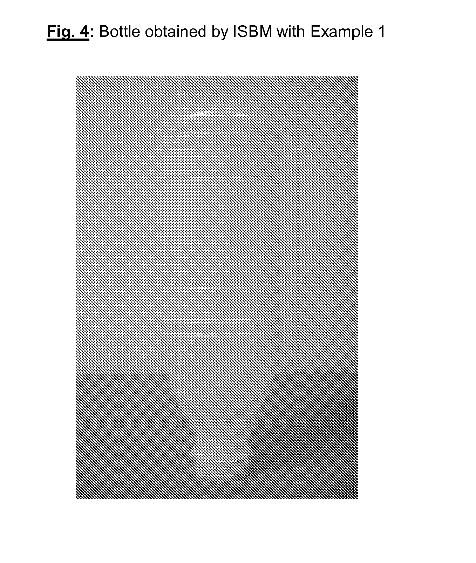

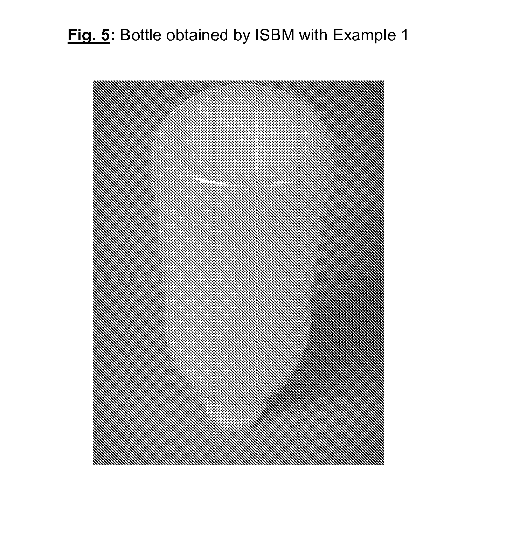

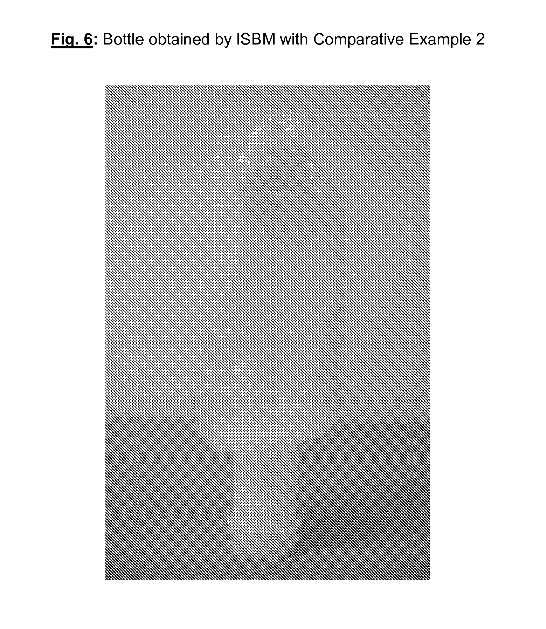

Table 4 and figures 3 to 6 show the aspect of each bottle.

**Table 4**

| | **Ex 1** | **Comp Ex 1** | **Comp Ex 2** |
|---|---|---|---|
| **Thickness repartition** | good | bad | break and/or deformation during preblowing or blowing |
| **Centered base** | centered | off-centered | |
| **Surface aspect** | good | bad | |
| **Process** | stable | unstable | |
| **Figures** | 4 and 5 | 3 | 6 |

Comparative Example 1 does not present a sufficient HLMI in order to give a good preform and hence the bottle is of low quality.

The HLMI of Comparative Example 2 is too high and hence the melt strength of this resin is insufficient in order to blow the preform. Breakage occurs during the preblowing or blowing stages.

### 4. Bottle properties

The bottle properties prepared with the resin of Example 1 are given in Table 5.

**Table 5**

| | | **Ex 1** | **Comp Ex 1** | **Comp Ex 2** |
|---|---|---|---|---|
| **Bottle weight** | g | 36 | 36 | 36 |
| **Thickness repartition** | mm | 0.499 | Holes and/or deformation | Break and/or deformation during preblowing or blowing |
| | Variability in thickness | 23% | | |
| **Dynamical compression (ISO 12048)** | Maximum Force (N) (deformation: 3.25 mm; speed=10 mm/min) | 225.5 | Too fragile to measure. | |
| **Drop tests (water: 1 l, at room temperature)** | F50 (m) | 6.1 | Holes and/or deformation | |

The drop tests were carried out with bottles filled with 1 litre of water at room temperature. The bottles were then dropped from increasing height, until 50% of the bottles dropped were cracked.

Only the resin according to the invention provides injection-stretch blow moulded containers having :
- a broad process window
- a good process stability
- a bottle with:
   ○ good thickness repartition
   ○ good surface aspects
   ○ good finishing, i.e. the moulded imprints on the bottle were acurate
   ○ high top load
   ○ high impact resistance
   ○ reduced weight per unit volume

## Claims

1. An injection stretch blow moulded container prepared essentially from polyethylene prepared in the presence of a chromium-based catalyst system, the polyethylene having a density of from 0.950 to 0.965 g/cm³, measured following the method of standard test ASTM 1505 at a temperature of 23 °C, a melt index MI₂ of from 0.5 to 5 g/10min, measured following the method of standard test ASTM D 1238 at a temperature of 190 °C and under a load of 2.16 kg, a high load melt index HLMI of from 40 to 150 g/10min, measured following the method of standard test ASTM D 1238 at a temperature of 190 °C and under a load of 21.6 kg,
- the container weighing from 10 to 150g per dm³ of volume, when the container has a volume of less than 300 cm³,
- the container weighing from 10 to 80g per dm³ of volume, when the container has a volume of at least 300 cm³.

2. The injection stretch blow moulded container according to claim 1 wherein the container weighs
- from 10 to 120g, preferably 10 to 100g per dm³ of volume of the container, when the container has a volume of less than 300 cm³,
- from 10 to 70g, preferably 10 to 50g per dm³ of volume of the container, when the container has a volume of at least 300 cm³.

3. The injection stretch blow moulded container according to claim 1 or 2 wherein the container has a thickness variation of from 10 to 30%.

4. The injection stretch blow moulded container according to any one of the preceding claims, the polyethylene having an MI₂ of from 0.7 to 3 g/10min.

5. The injection stretch blow moulded container according to any one of the preceding claims, the polyethylene having an HLMI of from 45 to 140 g/10min.

6. The injection stretch blow moulded container according to any one of the preceding claims wherein the chromium-based catalyst comprises from 0.2 to 1.5 wt% chromium based on the weight of the chromium-based catalyst.

7. The injection stretch blow moulded container according to any one of the preceding claims wherein the chromium-based catalyst system comprises a titania-containing support.

8. The injection stretch blow moulded container according to claim 7 wherein the chromium-based catalyst system comprises from 2 to 5 wt% titanium, based on the weight of the chromium-based catalyst.

9. The injection stretch blow moulded container according to any one of the preceding claims wherein the polyethylene has been prepared in a gas-phase process, preferably in a fluidised bed gas phase reactor.

10. The injection stretch blow moulded container according to any one claims 1 to 7 wherein the polyethylene has been prepared in a liquid slurry phase process, preferably in a liquid full loop reactor.

11. The injection stretch blow moulded container according to any one of the preceding claims for packaging consumer goods, preferably food products.

12. The injection stretch blow moulded container according to claim 11 wherein the container is a bottle for packaging dairy products, preferably milk.

13. A process for injection stretch blow moulding containers according to any one of the preceding claims using essentially a polyethylene prepared in the presence of a chromium-based catalyst system, the polyethylene having a density of from 0.950 to 0.965 g/cm³, measured following the method of standard test ASTM 1505 at a temperature of 23 °C, a melt index MI₂ of from 0.5 to 5 g/10min, measured following the method of standard test ASTM D 1238 at a temperature of 190 °C and under a load of 2.16 kg, and a high load melt index HLMI of from 40 to 150 g/10min, measured following the method of standard test ASTM D 1238 at a temperature of 190 °C and under a load of 21.6 kg,
- the container weighing from 10 to 150 g per dm³ of volume, when the container has a volume of less than 300 cm³,
- the container weighing from 10 to 80 g per dm³ of volume, when the container has a volume of at least 300 cm³.

14. Use of the injection stretch blow moulded container according to any one of claims 1 to 11 for packaging consumer goods, preferably food products.

15. Use of the injection stretch blow moulded bottle according to claim 12 for packaging dairy products, preferably milk.
